# EUROPÄISCHE PATENTSCHRIFT

(11) **EP 2 126 529 B1**
(45) Veröffentlichungstag und Bekanntmachung des Hinweises auf die Patenterteilung: **06.03.2019**
(21) Anmeldenummer: 08707412.6
(22) Anmeldetag: 30.01.2008
(51) Int. Cl.: G01K 1/12, G01K 7/16

(54) **SCHUTZEINRICHTUNG FÜR EINEN TURBOLADER-TEMPERATURSENSOR**
PROTECTIVE DEVICE FOR A TURBOCHARGER TEMPERATURE SENSOR
DISPOSITIF DE PROTECTION D'UN TURBOCOMPRESSEUR

(30) Priorität: 01.03.2007 DE 102007010403
(43) Veröffentlichungstag der Anmeldung: 02.12.2009
(73) Patentinhaber: HERAEUS SENSOR TECHNOLOGY GMBH, 63540 Hanau (DE)
(72) Erfinder: WIENAND, Karlheinz, 63741 Aschaffenburg (DE); BACHMANN, Mario, 76774 Leimersheim (DE); MUZIOL, Matthias, 63533 Mainhausen (DE); LOOSE, Thomas, 63589 Linsengericht (DE)
(74) Vertreter: Schultheiss & Sterzel Patentanwälte PartG mbB
(86) Internationale Anmeldenummer: PCT/EP2008/000717
(87) Internationale Veröffentlichungsnummer: WO 2008/104259

(56) Entgegenhaltungen:
- EP-A- 1 881 309
- DE-A1- 4 328 197
- DE-A1- 10 158 529
- DE-A1- 10 236 036
- DE-A1-102007 011 535

## Beschreibung

Die Erfindung betrifft eine Turbolader-Schutzeinrichtung, dafür als Bauteil geeignete Hochtemperatur-Sensorelemente und Verfahren zu deren Herstellung. Turbolader sind vor Überhitzung zu schützen, weshalb sie mit einer entsprechenden Schutzeinrichtung ausgestattet werden. Hierzu wurden Abschalteinrichtungen für Diesel-Turbolader auf 900°C bis 1.050°C und bei Benzinern bis auf 1.120°C eingestellt.

Für Benziner sind bislang nur Thermoelemente unter Ausnutzung des Seebeck-Effekts hierfür anwendbar. Aufwendig hierfür ist die Elektronik. Bis 900°C werden Halbleiter-Temperaturelemente (NTC) mit vereinfachter Elektronik angewendet. Problematisch an der negativen Temperaturcharakteristik ist, dass bei einer Drift die Abschaltung bei zu hohen Temperaturen erfolgt und der Turbolader Schaden nimmt.

DE 101 58 529 offenbart einen Hochtemperatur-Sensorelement, in dem ein Messwiderstandschip in einem Verguss innerhalb eines Hüllrohres eingebrannt und mit Bonddrähten an weitere Drähte angeschlossen ist, und wobei die Drähte von einem Kapillarrohr umhüllt sind. D1 offenbart weiter mehrere Ausführungsformen mit verschiedenen alternativen Lösungen zur Abschaffung mechanischer und thermischer Belastungen.

DE 102 36 036 offenbart einen Hochtemperatursensor mit einem Temperaturmesswiderstand auf einem Keramikplättchen, zwei Leitern und einem federnden Element, das den Widerstand mit einer mineralisolierten Zuleitung anschließt.

Es ist die Aufgabe der vorliegenden Erfindung, ein Hochtemperatur-Sensorelement für eine Turbolader-Überhitzungssicherung und eine sichere Turbolader-Überhitzungssicherung bereitzustellen, die einen geringeren elektronischen Aufwand erfordert als die Thermoelemente und die sowohl bei Temperaturen zwischen 900°C und 1.200°C, insbesondere bei 1.050°C bis 1.150°C anwendbar ist, als auch die Risiken der negativen Temperaturcharakteristik ausschaltet.

Zur Lösung der Aufgabe wird erfindungsgemäß ein Hochtemperatur-Sensorelement gemäß Anspruch 1 definiert, der bei Vibrationen des Turboladers durch Temperaturwechsel bedingte Verschleiß durch ein besonders schonendes Abfedern der temperaturbedingten Ausdehnungsarbeit abgefedert oder teilweise in einer Isolierung verhindert. Hierzu wird die Zuleitung zu dem Messwiderstandschip entweder dadurch stabilisiert dass die Zuleitung einen mineralisolierten Zuleitungsteil umfasst, auf dessen dem Temperaturerfassungselement, insbesondere Messwiderstand, zugewandten Ende Adern aus der Isolierung ragen, auf die federnde Bonddrähte aufgesteckt sind, die die Verbindung zwischen den Adern und dem Temperaturerfassungselement, insbesondere Messwiderstand oder einem am Temperaturerfassungselement, insbesondere Messwiderstand befindlichen Anschlussdraht herstellen, wobei die Bonddrähte federnd um die Adern der mineralisolierten Zuleitung gewickelt sind. Alternativ wird erfindungsgemäß zwischen dem Messwiderstandschip und einem Anschlusskabeln ein Wärmeentkopplungsdraht an dem dem Temperaturerfassungselement, insbesondere Messwiderstandschip zugewandten Ende einseitig eingespannt und an dem anderen Ende federnd mit dem Zuleitungskabel verbunden, wobei die Wärmeentkopplungsdrähte von einem keramischen Kapillarrohr umhüllt sind und an ihrem dem Messwiderstandschip entgegen gesetzten Ende mit spiralförmigen Anschlusskabeln verbunden sind. In beiden Ausführungen führen die zwischen dem Messwiderstandschip und dem Zuleitungskabel durch Temperaturwechsel und Vibration bedingten Belastungen auf die Leiter zu keinem Verschleiß an den Leitern, da die Spannungen entweder abgefedert werden, oder im Fall der Mineralisolierung die Adern so fest eingebettet sind, dass sie keine Ausdehnungsarbeit verrichten können und ein Scheuern ausgeschlossen wird. Maßgeblich ist, dass die Federung bei Hochtemperaturbelastung ohne Resonanzschwingungen senkrecht zu der Richtung erfolgt, in der die Längenausdehnung abgefedert wird und nicht innerhalb einer hoch temperaturbelasteten Isolierung erfolgt. Deshalb erfolgt erfindungsgemäß eine Federung im Hochtemperaturbereich mit einer frei auf einer Achse geführten Feder oder eine Verlagerung der Federung außerhalb der Temperaturbelastung.

Es wird ein Hochtemperatur-Sensorelement bereitgestellt, bei dem die Messspitze entsprechend den Anforderungen der Motorkonstruktion angepasst, insbesondere gebogen werden kann. Hierfür wird auf die Adern einer mehradrigen, insbesondere zweiadrigen, isolierten, insbesondere mineralisolierten Zuleitung erfindungsgemäß auf die aus der Isolierung ragenden Adern an dem dem Messwiderstandschip zugewandten Ende je eine Feder auf die Adern aufgesteckt, wobei die Federn jeweils elektrisch und mechanisch an einem Ende mit den Adern verbunden sind und an ihrem anderen Ende elektrisch und mechanisch mit dem Messwiderstandschip oder einem hochtemperaturbeständigen Anschlussdraht des Messwiderstandschips verbunden sind.

Erfindungsgemäß werden einfache Hochtemperatursensoren bereitgestellt, bei denen zwischen dem Messwiderstand des Messwiderstandschips und dem Zuleitungskabel ein Wärmeentkopplungsdraht angeordnet ist, bei denen erfindungsgemäß der Wärmeentkopplungsdraht an dem dem Messwiderstandschip zugewandten Ende einseitig eingespannt ist und an dem anderen Ende federnd mit dem Zuleitungskabel verbunden ist.

Das Hochtemperatur-Sensorelement für eine Turbolader-Überhitzungssicherung ist kombinierbar, bei dem der Messwiderstandschip in einem Verguss innerhalb eines Hüllrohres eingebrannt ist und federnd mit Bonddrähten an Wärmeentkopplungsdrähte angeschlossen ist, die aus dem Verguss führen, wobei die Wärmeentkopplungsdrähte erfindungsgemäß im Wesentlichen von einem keramischen Kapillarrohr umhüllt sind und an ihrem dem Messwiderstandschip entgegen gesetzten Ende mit einem spiralförmigen Anschlusskabel verbunden sind.

Erfindungsgemäß entlasten beide Ausführungen die dünnen hitzebeständigen Anschlussdrähte, insbesondere Bonddrähte am Messwiderstandschip bzw. NTC-Thermistor, die üblicherweise über Pads (Kontaktfelder) die thermosensitive Einheit mit Strom versorgen.

Diese Temperatursensoren weisen eine hervorragende Temperaturwechselbeständigkeit, insbesondere bezüglich schneller Temperaturwechsel auf, eignen sich als Hochtemperatursensoren und gestatten es, Turbolader-Überhitzungssicherungen mit einfacher Elektronik zuverlässig zu betreiben.

Eine Turbolader-Überhitzungssicherung wird erfindungsgemäß durch den Anspruch 6 definiert, und weist ein Hochtemperatur-Sensorelement für einen Temperaturbereich von -40 bis 1.200°C auf, bei dem das Hochtemperatur-Sensorelement ein Messwiderstandschip aus einem Platindünnschicht-Messwiderstand auf elektrisch isolierendem oxidischen Substrat aufweist, das in einem keramischen Verguss eingebettet ist und mit federnd geformten Bonddrähten elektrisch auf Adern einer mineralisolierten Zuleitung erfindungsgemäß umwickelt oder an Wärmeentkopplungsdrähte angeschlossen ist, die aus dem Verguss führen und erfindungsgemäß die Wärmeentkopplungsdrähte im Wesentlichen von einem keramischen Kapillarrohr umgeben und an ihrem dem Messwiderstandschip entgegen gesetzten Ende mit spiralförmig angeordneten Anschlusskabeln verbunden sind. Statt des Kapillarrohrs können die Wärmeentkopplungsdrähte auch in einem pulverförmigen oder wollartigem dielektrischem Material wie beispielsweise Mineralwolle geführt werden.

In einem erfindungsgemäßen Verfahren gemäß Anspruch 7 zur Herstellung eines Hochtemperatur-Sensorelements für eine Turbolader-Überhitzungssicherung, bei dem ein Messwiderstandschip in einem Verguss innerhalb eines Hüllrohres eingebrannt wird, federnd mit Bonddrähten an Adern einer mineralisolierten Zuleitung oder an Wärmeentkopplungsdrähte angeschlossen wird, die aus dem Verguss führen, werden erfindungsgemäß die Adern mit den Bonddrähten, insbesondere aus Pt oder PtRh oder Zuleitungen, insbesondere aus Chromstahl umwickelt oder die Wärmeentkopplungsdrähte im Wesentlichen von einem keramischen Kapillarrohr umhüllt und an ihrem dem Messwiderstandschip entgegen gesetzten Ende mit spiralförmigen Anschlusskabel verbunden.

Der Verguss ist ein oxidisches Material, insbesondere keramisches Material, vorzugsweise hochreines Aluminiumoxid. Der Verguss wird in einer Hülse gebrannt. Dabei sintert die Vergussmasse und fixiert den Messwiderstandschip. Die Hülse besteht vorzugsweise aus dem gleichen Material wie die Adern oder der Wärmeentkopplungsdraht. In einer für besonders hohe Temperaturanwendungen, insbesondere zwischen 1.000°C und 1.200°C bewährten Ausführung besteht die Hülse oder die Ader oder der Wärmeentkopplungsdraht aus einer Eisen-Aluminium-Chrom-Legierung. Vorzugsweise besteht die Legierung aus 50 bis 80, insbesondere 60 bis 75 Gew.-% Fe, 15 bis 40, insbesondere 20 bis 30 Gew.-% Cr, und 5 bis 30, insbesondere 10 bis 20 Gew.-% Al.

In einer für Temperaturanwendungen bis 1.000°C bewährten Ausführung besteht die Hülse oder die Ader oder der Wärmeentkopplungsdraht aus einer Nickel-Chrom-Legierung. Vorzugsweise besteht diese Legierung aus 60 bis 80, insbesondere 70 bis 75 Gew.-% Ni, 10 bis 25, insbesondere 15 bis 20 Gew.-% Cr, und 5 bis 10 Gew.-% Fe.

Insbesondere weist die mineralisolierte Zuleitung zwei in Verguss eingebettete Adern auf. Analog ist es besonders zweckmäßig, je zwei Wärmeentkopplungsdrähte einseitig einzuspannen und am jeweils anderen Ende federnd mit je einer Ader des Zuleitungskabels zu verbinden. Die Federung erfolgt vorzugsweise durch eine federnde Anordnung des Kabels, insbesondere dessen Adern. Die Wärmeentkopplungsdrähte dienen als elektrischer Leiter zwischen dem heißen und dem kalten Ende der Messspitze. Die Wärmeentkopplungsdrähte sind vorzugsweise zu über 50 %, insbesondere zu 60 bis 90 % ihrer Länge in einem keramischen Kapillarrohr geführt. Die Wärmeentkopplungsdrähte sind wesentlich dicker und länger als die Bonddrähte. Bewährte Adern oder Wärmeentkopplungsdrähte sind 0,4 bis 1 mm dick, Bonddrähte oder Federn 0,1 bis 0,25 mm.

Der Messwiderstand ist mit zwei Edelmetall aufweisenden Bonddrähten an die Federn, Adern oder Wärmeentkopplungsdrähte angeschlossen. Die Bonddrähte bestehen vorzugsweise aus Platin oder Platin-Rhodium-Legierung. Die Bonddrähte können aderseitig als Feder geformt werden. Die Federn können auch aus einem hochtemperaturbeständigen elektrischen Leiter bestehen, der an den Bonddraht oder Messwiderstandschip angeschlossen wird. Erfindungsgemäß wurde erkannt, dass bekannte Hochtemperatur-Messspitzen bei Anwendungen für Turbolader aufgrund mangelnder Temperaturwechselbeständigkeit zum Abreißen der Bonddrähte nach 1.000 bis 2.000 schnellen Temperaturwechseln führen. Es ist deshalb erfindungswesentlich, den Bereich der thermischen Entkopplung so zu gestalten, dass eine Materialermüdung aufgrund der Temperaturwechsel nicht zum Ausfall des Systems führt. Der erfindungsgemäß zugentlastete Sensor kann weiterhin vorteilhaft in dem gesamten Abgasstrang eingesetzt werden, beispielsweise als Temperatursensor für die Partikelfilterüberwachung, die Katalysatorüberwachung, insbesondere bezüglich NOₓ-Katalysatoren oder auch bezüglich Abgasrückführung.

Im Folgenden wird die Erfindung anhand von Beispielen mit Bezug auf die Zeichnungen verdeutlicht.
- Fig. 1: zeigt eine Ansicht einer Messspitze
- Fig. 2: ist ein Längsschnitt der Messspitze aus Fig. 1
- Fig. 3: ist ein Querschnitt
- Fig. 4: ist ein vergrößerter Bereich der Messspitze im Bereich des Chips
- Fig. 5: zeigt den Anschlussplan
- Fig. 6: zeigt eine Ansicht eines Hochtemperatursensors mit biegbarer Messspitze
- Fig. 7: zeigt einen Schnitt eines Hochtemperatursensors gemäß Fig. 6
- Fig. 8 und 9 6 und 7: zeigen eine Messspitze mit einer auf eine Ader aufgesteckten Feder gemäß Fig.

### Beispiel 1:

Temperatursensor, dessen Messspitze entsprechend den Anforderungen der Motorkonstruktion angepasst, insbesondere gebogen, werden kann.

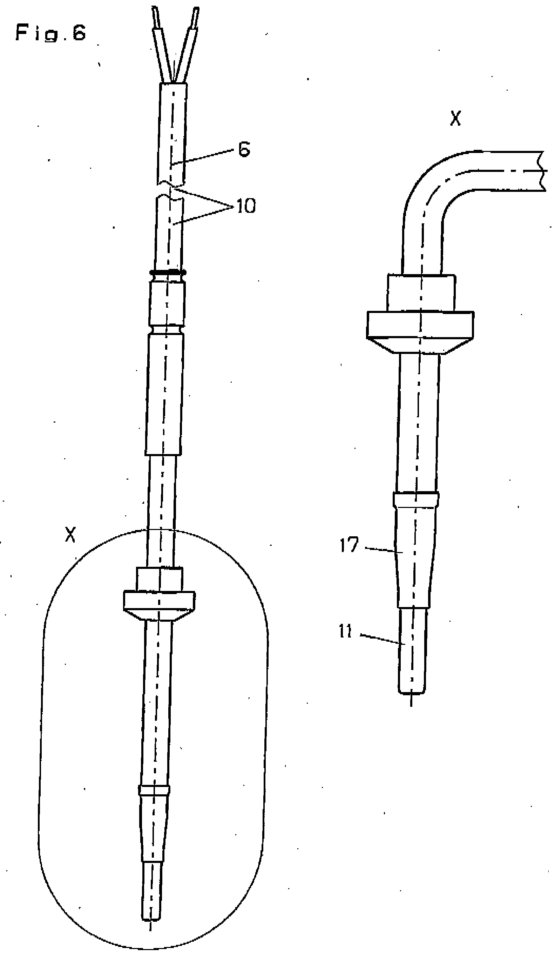

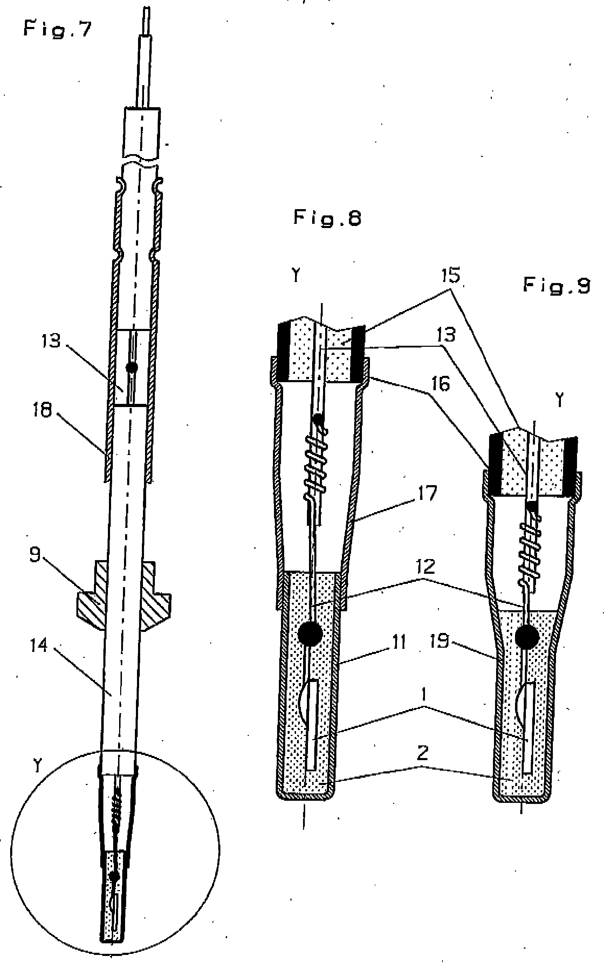

Ein Hochtemperatursensor mit biegbarer Messspitze weist eine gemäß Figur 6 oder 7 biegbare MI-Leitung auf, an der eine Messspitze angeordnet ist, die gemäß Figur 8 oder 9 ausgeführt werden kann. Der in Figur 8 dargestellte Schichtwiderstand 1 ist mit zwei Bonddrähten an je eine Spiralfeder angeschlossen, die wiederum je auf einer Ader einer MI-Leitung befestigt sind und diese jeweils umwickeln.

Hierbei wird die Verbindung zwischen dem Messwiderstandschip und dem Zuleitungskabel zumindest teilweise dadurch hergestellt, dass zwischen dem Messwiderstand und dem Zuleitungskabel Adern aus einer mineralisolierten Zuleitung an dem dem Messwiderstand zugewandten Ende aus der Mineralisolierung heraustreten und mit je einer Feder elektrisch und mechanisch verbunden sind und die Federn jeweils um die Adern gewickelt geführt sind.

Mit einem 1.200°C resistenten Schichtwiderstand auf Basis der Broschüre "Platin Dünnschichtsensoren, die überzeugen" von der Heraeus Sensor Technology GmbH, Stand 04/2006, insbesondere nach der nicht vorveröffentlichten Patentanmeldung DE 10 2007 046 900 A1 aus einem Platindünnschicht-Messwiderstand auf einem Saphirsubstrat, bei dem Anschlussdrähte als Platin-Bonddrähte mit einem Fixiertropfen zugentlastet am Keramiksubstrat befestigt sind, wird ein Hochtemperatur-Sensorelement für einen Temperaturbereich von -40°C bis 1.200°C geschaffen. Die maßgebliche Einsatztemperatur für Turbolader liegt derzeit bei über 1.050°C. Der Schichtwiderstand (1) wird in einem Verguss (2) aus hochreinem Aluminiumoxid in eine Metallhülse (11) aus Nickel-Chromstahl (alloy 602 ca) (61 Gew.-% Ni, 25 Gew.-% Cr, 10 Gew.-% Fe und 2,2 Gew.-% AI) eingebettet und mit zu Federn geformten 0,25 mm dicken Zuleitungsdrähten (12) aus Chromstahl mit 70 Gew.-% Eisen, 25 Gew.-% Chrom und 5 Gew.-% Aluminium elektrisch an 0,6 mm dicke Adern (13) der mineralisolierten Leitung (14) angeschlossen (Fig. 7 und 8). Die Adern (13) aus Nickel-Chromstahl mit 80 Gew.-% Nickel und 20 Gew.-% Chrom sind eingebettet in ein hoch verdichtetes mineralisches Pulver (15), welches von einem schützenden Metallmantel (16) aus alloy 601 (60 Gew.-% Ni, 21 Gew.-% Cr, 15 Gew.-% Fe und 1,2 Gew.-% AI) umgeben ist. Die Adern (13) der mineralisolierten Leitung (14) sind an ihrem dem Schichtwiderstand (1) entgegengesetzten Ende elektrisch mit 0,6 mm dicken Leitungen des Anschlusskabels (6) verbunden (Fig. 6 und 7).

Die federnd geformten Zuleitungsdrähte (12) sind erfindungsgemäß als Spiralfedern auf die Adern (13) der mineralisolierten Leitung aufgesteckt und an ihrem dem Schichtwiderstand (1) entgegengesetzten Ende elektrisch mit den Adern verbunden. Da bei schnellen Temperaturwechseln bis zur Temperatur der Turbolader von 1.050°C die relative Längenänderung zwischen der mineralisolierten Leitung (14) und dem Schichtwiderstand (1) in der Metallhülse (11) zum Bruch herkömmlicher Zuleitungsdrähte führt, wird erfindungsgemäß ein derartiger Ausfall der Turbolader-Schutzeinrichtung vermieden, indem auf den Adern geführten Spiralfedern die vielfältigen Belastungen erheblich abgeschwächt werden, insbesondere die mit der Längenausdehnung und der Vibration des Fahrzeugs verursachten Belastungen.

Die Adern (13) der mineralisolierten Leitung sind mit den spiralisch geformten Zuleitungsdrähten (12) elektrisch verbunden und schränken die Bewegungsmöglichkeiten des Zuleitungsdrahtes dadurch ein, dass der Zuleitungsdraht als Spiralfeder auf den als Achsen dienenden Adern geführt ist (Fig. 8). Deshalb wird erfindungsgemäß ein Abreißen der Zuleitungsdrähte bei Erschütterungen vermieden und ein hoher Vibrationsschutz bereitgestellt, welcher für die Anwendung als Turbolader-Schutzeinrichtung erst eine ausreichende Lebensdauer ermöglicht.

Die Metallhülse (11) aus Nickel-Chromstahl (alloy 602 ca; 61 Gew.-% Ni, 25 Gew.-% Cr, 10 Gew.-% Fe und 2,2 Gew.-% AI) wird mechanisch mit der MI-Leitung (14) direkt verbunden oder gegebenenfalls gemäß Fig. 8 über ein Zwischenstück 17 aus gleichem Material.

Der Verguss (2) aus hochreinem Aluminiumoxid (99,9 %) wird in einer Metallhülse (11) dosiert und gebrannt. Dabei sintert die Vergussmasse und fixiert den Schichtwiderstand (1). Die Ausführung ist für besonders hohe Temperaturanwendungen geeignet, insbesondere bis 1.200°C. In einer für Temperaturanwendungen bis 1.000°C bewährten Ausführung besteht die Metallhülse (11) aus einer Nickel-Chrom-Legierung mit 72 Gew.-% Nickel, 16 Gew.-% Chrom und 8 Gew.-% Eisen.

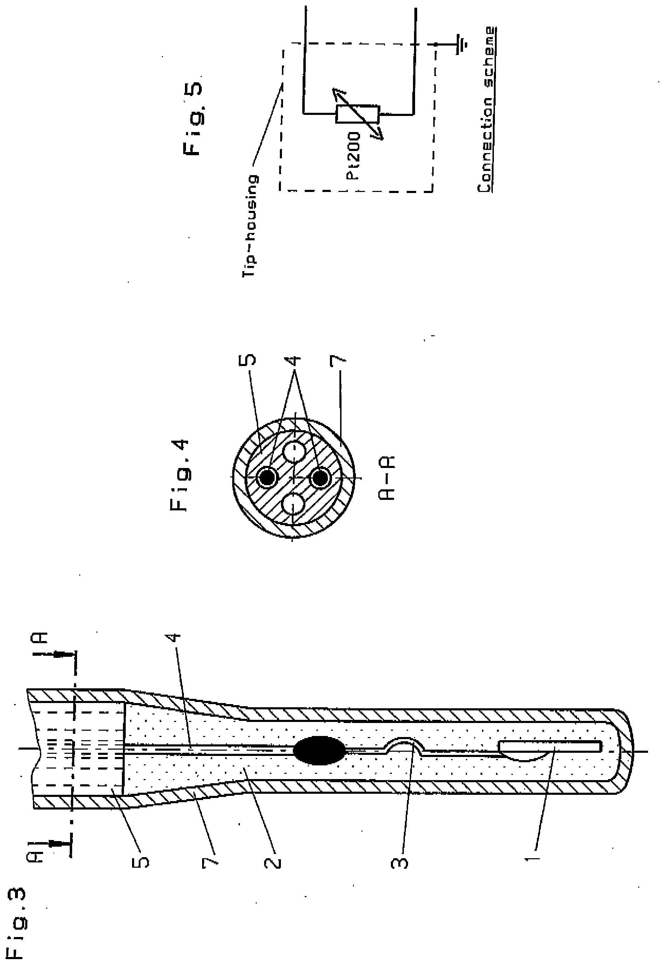

Es hat sich bewährt, ein zusätzliches Rohr (18) teilweise über die MI-Leitung (14) zu schieben und mit dieser zu verschweißen. Das zusätzliche Rohr (18) schützt die Verbindung der Adern (13) mit dem Anschlusskabel (6), welches über zwei Sicken (10) in dem zusätzlich aufgeschobenen Rohr abgedichtet und fixiert wird. Die Messspitze ist im Bereich der MI-Leitung biegbar (Fig. 6). Die Temperaturwechselbeständigkeit der Zuleitungsdrähte hält 10.000, insbesondere gemäß den Beispielen 20.000 Temperaturwechsel bei Temperaturwechseln von 100°C bis 850°C und einer Zeit T63 von 6 Sekunden, entsprechend einer Heizrate von 90K/sec aus. Erfindungsgemäß ist daher der Bereich der thermischen Entkopplung gemäß den Beispielen so gestaltet, dass eine Materialermüdung aufgrund der Temperaturwechsel nicht zum Ausfall des Systems führt. Der Anschlussplan gemäß Fig. 5 zeigt den Anschluss der MI-Leitung (14) an die Masse. Ein Flansch (9) aus obiger Nickel-Chrom-Legierung dient der Festlegung einer Einführtiefe der Messspitze.

### Beispiel 2:

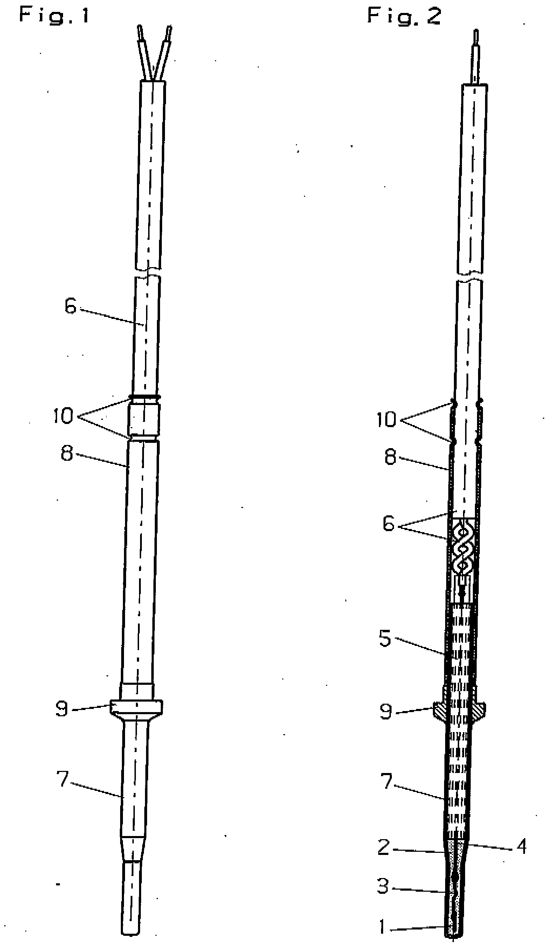

Mit einem Chip 1 aus einem Platindünnschicht-Messwiderstand auf einem Saphirsubstrat wird ein Hochtemperatur-Sensorelement für einen Temperaturbereich von -40°C bis 1.200°C geschaffen. Der Chip 1 wird in einem Verguss 2 aus hochreinem Aluminiumoxid eingebettet und mit federnd geformten Bonddrähten 3 aus Platin elektrisch an Wärmeentkopplungsdrähte 4 aus Chromstahl mit 70 Gew.-% Eisen, 25 Gew.-% Chrom und 5 Gew.-% Aluminium angeschlossen (Fig. 4). Die Wärmeentkopplungsdrähte 4 sind erfindungsgemäß im Wesentlichen von einem Kapillarrohr 5 aus Aluminiumoxid umgeben (Fig. 3). An ihrem dem Chip 1 entgegen gesetzten Ende sind die Wärmeentkopplungsdrähte 4 mit spiralförmig angeordneten Adern des Anschlusskabels 6 verbunden (Fig. 1 und 2).

Der Verguss 2 wird in einer Hülse 7 aus Chromstahl mit 70 Gew.-% Eisen, 25 Gew.-% Chrom und 5 Gew.-% Aluminium dosiert und gebrannt. Dabei sintert die Vergussmasse und fixiert den Chip 1. Diese Ausführung ist für besonders hohe Temperaturanwendungen insbesondere bis 1.200°C geeignet. In einer für Temperaturanwendungen bis 1.000°C bewährten Ausführung bestehen die Hülse 7 und die Wärmeentkopplungsdrähte 4 aus einer Nickel-Chrom-Legierung mit 72 Gew.-% Nickel, 16 Gew.-% Chrom und 8 Gew.-% Eisen.

Vorzugsweise wird ein zusätzliches Rohr 8 teilweise über die Hülse 7 geschoben und mit dieser verschweißt. Das zusätzliche Rohr 8 schützt die Verbindung der Wärmeentkopplungsdrähte mit dem Anschlusskabel, welches über zwei Sicken 10 in dem zusätzlich aufgeschobenen Rohr 8 abgedichtet und fixiert wird.

Die Temperaturwechselbeständigkeit der Bonddrähte hält 10.000, insbesondere gemäß den Beispielen 20.000 Temperaturwechsel bei Temperaturwechseln von 100°C bis 850°C und einer Zeit t₆₃ von 6 sec entsprechend einer Heizrate von 90 K/sec aus. Erfindungsgemäß ist daher der Bereich der thermischen Entkopplung gemäß den Beispielen so gestaltet, dass eine Materialermüdung aufgrund der Temperaturwechsel nicht zum Ausfall des Systems führt.

Der Anschlussplan gemäß Fig. 5 zeigt die Hülse 7 an die Masse angeschlossen.

Ein Flansch 9 aus obiger Nickel-Chrom-Legierung dient der Festlegung einer Einführtiefe der Messspitze.

## Patentansprüche

1. Hochtemperatur-Sensorelement für eine Turbolader-Überhitzungssicherung, wobei das Hochtemperatur-Sensorelement Anschlusskabel (6, 12) aufweist, und wobei bei dem Hochtemperatur-Sensorelement ein Messwiderstandschip (1) in einem Verguss (2) innerhalb eines Hüllrohres (7, 11, 19) eingebrannt und federnd mit Bonddrähten (3) entweder an Adern (13) einer mineralisolierten Zuleitung (14) oder an Wärmeentkopplungsdrähte (4) angeschlossen ist, die aus dem Verguss (2) führen, **dadurch gekennzeichnet, dass** entsprechender weise entweder die Bonddrähte (3) federnd um die Adern (13) der mineralisolierten Zuleitung (14) gewickelt sind oder die Wärmeentkopplungsdrähte (4) im Wesentlichen von einem keramischen Kapillarrohr (5) umhüllt sind und an ihrem dem Messwiderstandschip (1) entgegen gesetzten Ende mit den Anschlusskabeln (6, 12) verbunden sind, wobei die Anschlusskabel (6, 12) spiralförmig sind.

2. Hochtemperatur-Sensorelement nach Anspruch 1, **dadurch gekennzeichnet, dass** der Messwiderstandschip (1) mit zwei Edelmetall aufweisenden Bonddrähten (3) an die Adern (13) oder Wärmeentkopplungsdrähte (4) angeschlossen ist.

3. Hochtemperatur-Sensorelement nach Anspruch 2, **dadurch gekennzeichnet, dass** die Bonddrähte (3) aus Platin oder Platin-Rhodium-Legierung bestehen.

4. Hochtemperatur-Sensorelement nach einem der Ansprüche 1 bis 3, **dadurch gekennzeichnet, dass** entsprechender weise entweder wenigstens eine Ader (13) oder ein Wärmeentkopplungsdraht (4) aus einer Eisen-Aluminium-Chrom-Legierung besteht.

5. Hochtemperatur-Sensorelement nach Anspruch 4, **dadurch gekennzeichnet, dass** entsprechender weise entweder wenigstens eine Ader (13) oder ein Wärmeentkopplungsdraht (4) 50 bis 80 Gew.-% Eisen, 15 bis 40 Gew.-% Aluminium und 5 bis 30 Gew.-% Chrom aufweist.

6. Turbolader-Überhitzungssicherung, umfassend ein Hochtemperatur-Sensorelement nach einem der Ansprüche 1 bis 5 für einen Temperaturbereich von -40°C bis 1.200°C, bei dem das Hochtemperatur-Sensorelement den Messwiderstandschip (1) aus einem Platindünnschicht-Messwiderstand auf elektrisch isolierendem oxidischen Substrat aufweist, der in einem keramischen Verguss (2) eingebettet ist und mit federnd geformten Bonddrähten (3) elektrisch entweder an den Adern (13) oder den Wärmeentkopplungsdrähten (4) angeschlossen ist, die aus dem Verguss (2) führen, **dadurch gekennzeichnet, dass** entsprechender weise entweder die Bonddrähte (3) federnd um die Adern (13) gewickelt sind oder die Wärmeentkopplungsdrähte (4) im Wesentlichen von einem keramischen Kapillarrohr (5) umgeben sind und an ihrem dem Messwiderstandschip (1) entgegen gesetzten Ende mit spiralförmig angeordneten Anschlusskabel (6, 12) verbunden sind.

7. Verfahren zur Herstellung eines Hochtemperatur-Sensorelements für eine Turbolader-Überhitzungssicherung, bei dem ein Messwiderstandschip (1) in einem Verguss (2) innerhalb eines Hüllrohres (7, 11, 19) eingebrannt und federnd mit Bonddrähten (3) entweder an Adern (13) einer mineralisolierten Zuleitung (14) oder an Wärmeentkopplungsdrähte (4) angeschlossen wird, die aus dem Verguss (2) führen, **dadurch gekennzeichnet, dass** entsprechender weise entweder die Bonddrähte (3) federnd um die Adern (13) gewickelt werden oder die Wärmeentkopplungsdrähte (4) im Wesentlichen von einem keramischen Kapillarrohr (5) umhüllt werden und an ihrem dem Messwiderstandschip (1) entgegen gesetzten Ende mit spiralförmigen Anschlusskabeln (6, 12) verbunden werden.

## Claims

1. High-temperature sensor element for a turbocharger overheating protection, wherein the high-temperature sensor element having connecting cables (6, 12), and wherein a measuring resistor chip (1) being burnt into the high-temperature sensor element in a potting (2) inside a sheathing tube (7, 11, 19) and being connected resiliently with bonding wires (3) either to cores (13) of a mineral-insulated feed line (14) or to heat-decoupling wires (4), which lead out of the pottting (2), **characterized in that**, accordingly, either the bonding wires (3) are wound resiliently around the cores (13) of the mineralized feed line (14) or the heat-decoupling wires (4) are essentially sheathed by a ceramic capillary tube (5) and at their end opposite to the measuring resistor chip (1) are connected to the connecting cables (6, 12), wherein the connecting cables (6, 12) being spiral.

2. High temperature sensor element according to claim 1, **characterized in that** the measuring resistor chip (1) is connected to the cores (13) or heat decoupling wires (4) by two bonding wires (3) having noble metal.

3. High temperature sensor element according to claim 2, **characterized in that** the bonding wires (3) are made of platinum or platinum-rhodium alloy.

4. A high temperature sensor element satisfying any of Claims 1 to 3, **characterised in that**
correspondingly, either at least one core (13) or a heat decoupling wire (4) is made of an iron-aluminium-chromium alloy.

5. High temperature sensor element according to Claim 4, **characterized in that** correspondingly, either at least one core (13) or a heat decoupling wire (4) has 50 to 80 wt.% iron, 15 to 40 wt.% aluminium and 5 to 30 wt.% chromium.

6. A turbocharger overheat protection comprising a high temperature sensor element according to any one of Claims 1 to 5 for a temperature range of -40°C to 1.200°C, wherein the high temperature sensor element comprises the measuring resistor chip (1) of a platinum thin film measuring resistor on an electrically insulating oxidic substrate embedded in a ceramic potting (2) and electrically connected with resiliently formed bonding wires (3) to either the cores (13) or the heat-decoupling wires (4) leading out of the potting (2), **characterized in that** in a corresponding manner either the bonding wires (3) are wound resiliently around the cores (13) or the heat-decoupling wires (4) are substantially surrounded by a ceramic capillary tube (5) and are connected at their end opposite the measuring resistor chip (1) to connecting cables (6, 12) arranged spirally.

7. Method for producing a high-temperature sensor element for a turbocharger overheating protection device, in which a measuring resistor chip (1) is burnt into a potting (2) within a sheathing tube (7, 11, 19) and is connected resiliently with bonding wires (3) either to cores (13) of a mineral-insulated feed line (14) or to heat-decoupling wires (4), which lead out of the potting (2), **characterized in that**, accordingly, either the bonding wires (3) are wound resiliently around the cores (13) or the heat-decoupling wires (4) are essentially sheathed by a ceramic capillary tube (5) and are connected at their end opposite the measuring resistor chip (1) to spiral-shaped connecting cables (6, 12).

## Revendications

1. Elément de capteur de haute température destiné à une protection contre la surchauffe d'un turbocompresseur, l'élément de capteur de haute température présentant des câbles d'alimentation (6, 12), et où, dans le cas de l'élément de capteur de haute température, une résistance de mesure (1) est incorporée dans un scellement (2) à l'intérieur d'un tuyau de gainage (7, 11, 19) et est raccordée de manière élastique avec des fils de connexion (3) soit à des filons (13) d'une conduite d'alimentation (14) isolée par de la matière minérale, soit à des fils de découplage thermique (4) qui sortent du scellement (2), **caractérisé en ce qu'**en conséquence, soit les fils de connexion (3) sont enroulés de manière élastique autour des filons (13) de la conduite d'alimentation (14) isolée par de la matière minérale, soit les fils de découplage thermique (4) sont essentiellement gainés par un tube capillaire en céramique et sont reliés avec des câbles d'alimentation (6, 12) à leurs extrémités opposées à la résistance de mesure (1), les câbles d'alimentation (6, 12) étant en forme de spirales.

2. Elément de capteur de haute température selon la revendication 1, **caractérisé en ce que**
la résistance de mesure (1) est connectée aux filons (13) ou aux fils de découplage thermique (4) avec deux fils de connexion (3) présentant du métal noble.

3. Elément de capteur de haute température selon la revendication 2, **caractérisé en ce que**
les fils de connexion (3) sont constitués de platine ou d'un alliage de platine et de rhodium.

4. Elément de capteur de haute température selon l'une des revendications 1 à 3, **caractérisé en ce qu'**en conséquence
soit au moins un filon (13), soit au moins un fil de découplage thermique (4), est constitué d'un alliage de fer, d'aluminium et de chrome.

5. Elément de capteur de haute température selon la revendication 4, **caractérisé en ce qu'**en conséquence
soit au moins un filon (13), soit au moins un fil de découplage thermique (4), présente de 50 à 80 % en poids de fer, de 15 à 40 % en poids d'aluminium et de 5 à 30 % en poids de chrome.

6. Protection contre la surchauffe de turbocompresseur, comprenant un élément de capteur de haute température selon l'une des revendications 1 à 5 pour une plage de température de -40 °C à 1 200 °C, chez lequel l'élément de capteur de haute température présente la résistance de mesure (1) à base d'une résistance de mesure à couche mince de platine sur un substrat oxydant isolé électriquement qui est incorporé dans un scellement (2) en céramique et est raccordé électriquement avec des fils de connexion (3) conçus élastiques soit aux filons (13, soit aux fils de découplage thermique (4) qui sortent du scellement (2), **caractérisée en ce qu'**en conséquence
soit les fils de connexion (3) sont enroulés de manière élastique autour des filons (13), soit les fils de découplage thermique (4) sont essentiellement entourés d'un tube capillaire en céramique (5) et sont reliés avec des câbles d'alimentation (6, 12) disposés en forme de spirales à leurs extrémités opposées à la résistance de mesure (1).

7. Procédé de fabrication d'un élément de capteur de haute température destiné à la protection contre la surchauffe d'un turbocompresseur, chez lequel une résistance de mesure (1) est incorporée dans un scellement (2) à l'intérieur d'un tuyau de gainage (7, 11, 19) et est raccordée de manière élastique avec des fils de connexion (3) soit à des filons (13) d'une conduite d'alimentation (14) isolée par de la matière minérale soit à des fils de découplage thermique (4) qui sortent du scellement (2), **caractérisé en ce qu'**en conséquence soit les fils de connexion (3) sont enroulés de manière élastique autour des filons (13), soit les fils de découplage thermique (4) sont essentiellement gainés par un tube capillaire (5) en céramique et sont reliés avec des câbles d'alimentation (6, 12) à leurs extrémités opposées à la résistance de mesure (1).
